# EUROPÄISCHE PATENTSCHRIFT

(11) **EP 1 839 028 B1**
(45) Veröffentlichungstag und Bekanntmachung des Hinweises auf die Patenterteilung: **29.10.2008**
(21) Anmeldenummer: 06701298.9
(22) Anmeldetag: 20.01.2006
(51) Int. Cl.: G01N 3/38

(54) **VORRICHTUNG ZUR DYNAMISCHEN BELASTUNGSPRÜFUNG EINER PROBE**
DEVICE FOR DYNAMICALLY LOAD TESTING A SAMPLE
DISPOSITIF D'ESSAI DE CHARGE DYNAMIQUE SUR UN ECHANTILLON

(30) Priorität: 21.01.2005 DE 102005003013
(43) Veröffentlichungstag der Anmeldung: 03.10.2007
(73) Patentinhaber: Fraunhofer-Gesellschaft zur Förderung der angewandten Forschung e.V., 80686 München (DE)
(72) Erfinder: MELZ, Tobias, 64285 Darmstadt (DE); MATTHIAS, Michael, 64285 Darmstadt (DE); HANSELKA, Holger, 64297 Darmstadt (DE)
(74) Vertreter: Rösler, Uwe
(86) Internationale Anmeldenummer: PCT/EP2006/000514
(87) Internationale Veröffentlichungsnummer: WO 2006/077143

(56) Entgegenhaltungen:
- DE-A1- 19 820 322
- FR-A- 2 680 003
- GB-A- 2 060 179
- GB-A- 2 222 657
- US-A- 5 291 967
- PATENT ABSTRACTS OF JAPAN Bd. 011, Nr. 157 (M-590), 21. Mai 1987 (1987-05-21) & JP 61 286634 A (MEIRITSU SEIKI KK), 17. Dezember 1986 (1986-12-17)

## Beschreibung

### Technisches Gebiet

Die Erfindung bezieht sich auf eine Vorrichtung zur dynamischen Belastungsprüfung einer Probe mit einem Lager, mit dem die Probe mittelbar oder unmittelbar lösbar fest verbindbar ist, sowie einem Gegenlager, das über wenigstens ein Aktorelement mit der Probe derart in Wirkverbindung bringbar ist, dass das wenigstens eine Aktorelement dynamische mechanische Belastungen in die Probe einleitet, die längs eines zwischen dem Lager und dem Gegenlager gerichteten und durch die Probe verlaufenden Lastpfades wirken, und dass das wenigstens eine Aktorelement ein multifunktionales Festkörperwandlerwerkstoffsystem aufweist, das durch Energiezufuhr Deformationen erfährt, die ursächlich oder zumindest mitursächlich für die innerhalb der Probe auftretenden mechanischen Belastungen sind.

### Stand der Technik

Nicht zuletzt bedingt durch stets wachsende Qualitätsanforderungen an technische Bauteile und Komponenten gilt es sicher zu stellen, dass geforderte Qualitäts- und Sicherheitsstandards stets eingehalten werden. Zur Qualitätssicherung und -kontrolle sind vielfältige Prüfvorrichtungen und Prüfverfahren bekannt, von denen sich die weiteren Ausführungen auf Vorrichtungen zur dynamischen Belastungsprüfung beschränken, mit denen technische Systeme, Bauteile und Komponenten sowie auch einfache Materialproben hinsichtlich ihrer mechanischen Belastbarkeit überprüft werden können. So können mittels derartiger dynamischer Belastungsprüfungen Aussagen über die Material- / Bauteileigenschaften, Material- / Bauteilermüdung bzw. Rissbildung oder Rissfortschritt pro auf das jeweilige Bauteil einwirkenden Lastwechsel angestellt sowie Aussagen hinsichtlich des Strukturdynamischen Verhaltens getroffen werden.

Zum Zwecke der dynamischen Belastungsprüfung an einer Probe sind so genannte Pulsatoren entwickelt worden, mit deren Hilfe Proben einer mehr oder weniger sinusförmigen Wechselbelastung ausgesetzt werden können. Die Probe wird hierzu in einer geeigneten Einspannvorrichtung an zwei gegenüberliegenden Probenbereichen fixiert, die den Lastpfad festlegen, längs dem die Probe dynamischen Druck- und/oder Zugkräften ausgesetzt wird. Zur Erzeugung der auf bzw. in die Probe einwirkenden, sich dynamisch verändernden Belastungskräfte finden bei an sich bekannten Prüfvorrichtungen Aktoren Einsatz, die auf Basis servohydraulischer, servopneumatischer oder servoelektrischer Systeme arbeiten.

Stellvertretend für gattungsgemäße Prüfmaschinen, die einen auf dem servohydraulischen Wirkprinzip beruhenden Aktor vorsehen, sei auf die DE 198 20 322 A1 verwiesen, die eine servohydraulische Resonanzprüfmaschine beschreibt. In einem stabilen Belastungsrahmen ist über eine geeignet ausgebildete Schnittstelle einseitig eine Probe lösbar fest angebracht, die andererseits über eine weitere Schnittstelle mit einer Kolbenstange einer Kolben-Zylindereinheit verbunden ist. Die Zylindereinheit ist relativ zum Belastungsrahmen fest angeordnet, wohingegen die Kolbenstange relativ zum Belastungsrahmen kontrolliert auslenkbar ist. Die Auslenkung der Kolbenstange erfolgt Öldruckgesteuert.

Aus der DE 28 29 858 geht ein Pulsator hervor, dessen Aktor auf einem elektromagnetischen Wirkprinzip beruht. Die zu überprüfende Probe wird einseitig in eine Halterung eingespannt und andererseits mit einer Kappe aus magnetisch leitendem Material versehen, die getrennt durch einen Luftspalt einem elektromagnetischem Gegenpol angeordnet ist, zwischen dem und der Kappe ein elektromagnetisches Wechselfeld angelegt wird, wodurch die mit der Probe verbundene Kappe in Abhängigkeit der Magnetfeldorientierung in Richtung des Magnetpols angezogen bzw. von diesem abgestossen wird.

Mit Hilfe der bis dahin bekannten auf servohydraulischen, servopneumatischen oder servoelektrischen Wirkprinzipien beruhenden Aktoren ist systembedingt die Generierung von in die jeweilige zu untersuchende Probe induzierbaren Wechselbelastungen auf eine maximale Frequenz von ca. 100 Hz beschränkt. Auch so genannte Hochfrequenzprüfanlagen oder Hochfrequenz-Resonanzpulser, beispielsweise gemäß der in der vorstehenden zitierten deutschen Druckschrift DE 28 29 858 beschriebenen Prüfanlage, sind die Wechselbelastungsfrequenzen typischerweise auf maximal 1000 Hz begrenzt. Darüber hinaus ermöglichen gattungsgemäße Hochfrequenzpulser lediglich die Erzeugung monofrequenter Belastungssignale, so dass sie lediglich in so genannten Einstufenversuchen einsetzbar sind.

Ferner sind elektrodynamische Schwingungserreger bekannt, mit denen Wechselbelastungsfrequenzen bis in den akustischen Bereich hinein realisierbar sind, jedoch sind derartige, auch als elektrodynamische Shaker bekannte Schwingungserreger lediglich in der Lage, modale bzw. Fußpunkt-erregte Belastungen in den Prüfkörper hervorzurufen, die nicht längs eines Lastpfades wirken, der durch wenigstens zwei Befestigungspunkte der zu untersuchenden Probe vorgegeben ist, sondern längs einer Schwingungsebene wirken, die zugleich Auflageebene für den Prüfkörper ist, über die der Prüfkörper mit dem Shaker verbunden ist. Ein derartiger elektrodynamischer Shaker wird beispielsweise von der Forschungsgesellschaft Kraftfahrwesen mbH, Aachen angeboten, der Belastungsfrequenzen bis zu 4000 Hz zu generieren in der Lage ist.

Die Anforderungen, die an neue Werkstoffe, Strukturen, technische Bauteile und Komponenten sowie Systeme gestellt werden, benötigen Prüfanlagen, die eine große Freiheit bezüglich des zu generierenden Testsignals bzw. Belastungssignals ermöglichen und durch die der Frequenzbereich deutlich zu höheren Frequenzen erweitert werden kann. Die Möglichkeiten, derartige hochdynamischen Prozesse zu steuern bzw. zu regeln, stellen aufgrund der immer leistungsfähigeren Rechnertechnik zwar große Herausforderungen, jedoch nicht das zentrale gerätetechnische Problem dar. Vielmehr mangelt es derzeit an der Möglichkeit, die technisch generierbaren Belastungssignale in geeigneter Form in die zu testenden Strukturen oder Proben längs eines vordefinierten Lastpfades bzw. Kraftflusses einzukoppeln. Von zentraler Bedeutung ist daher die Entwicklung neuer Prüfaktoren bzw. Belastungskomponenten.

Aus der GB 2 060 179 A ist eine Materialprüfvorrichtung zu entnehmen, bei der ein zu testender Werkstoff einseitig in einem festen Gegenlager eingespannt ist und andererseits an eine Aktoreinheit gekoppelt ist, die ihrerseits an einem Rahmen angelenkt ist, der mit dem festen Gegenlager verbunden ist. Die Aktoreinheit besteht aus piezoelektrischen Elementen, die stapelförmig miteinander verbunden sind. Durch entsprechende elektrische Spannungsversorgung U vermögen die piezoelektrischen Elemente 22 hochfrequente Schwingungen zu erzeugen, die zu Zwecken der Belastungsprüfung in die Probe eingeleitet werden. Der Einsatz eines derartigen Aktors erlaubt es Belastungsschwingungen bis in den Kilohertzbereich zu generieren.

Aus der US 3 842 662 ist eine ähnlich aufgebaute Vorrichtung zu entnehmen, bei der eine Probe mittels piezokeramischer Elemente mit hochfrequenten Schwingungen beaufschlagt wird. Zusätzlich sind zur Presskraftunterstützung hydraulische Einheiten vorgesehen, die in hybrider Form eine zusätzliche mechanische Belastung auf die Probe bewirken.

In einer vergleichbaren Anordnung zur Durchführung von Ermüdungsversuchen an einer Probe gemäß der Druckschrift GB 2 367 631 A sorgt ein u. a. aus piezoelektrischem oder magnetostriktivem Material bestehender Aktor zur Krafteinleitung und Ausbildung resonanter Strukturschwingungen innerhalb einer zu untersuchenden Probe

### Darstellung der Erfindung

Der Erfindung liegt die Aufgabe zugrunde eine Vorrichtung zur dynamischen Belastungsprüfung einer Probe mit einem Lager, mit dem die Probe mittel- oder unmittelbar lösbar fest verbindbar ist, sowie mit einem Gegenlager, das über wenigstens ein Aktorelement mit der Probe derart in Wirkverbindung steht, dass das wenigstens eine Aktorelement dynamische mechanische Belastungen, vorzugsweise Druck- und/oder Zugkräfte und/oder Torsionskräfte und/oder Biegekräfte und/oder Schubkräfte, in die Probe einleitet, die längs eines zwischen dem Lager und dem Gegenlager gerichteten und durch die Probe verlaufenden Lastpfades wirken, derart weiterzubilden, dass eine möglichst effiziente Belastungseinkopplung in die zu untersuchende Probe längs eines Lastpfades mit strukturakustischen Belastungsfrequenzen von 1000 Hz, vorzugsweise 3000 Hz und mehr möglich wird. Darüber hinaus gilt es neben der Erzeugung und Einkopplung monofrequenter Wechselbelastungen innerhalb einer Probe auch auf die Probe einwirkende dynamische Belastungsmuster zu generieren, die von einer sinusförmigen Wechselbelastung abweichen, insbesondere zeitlich variable Pulsbelastungen etc darstellen. Der hierfür erforderliche steuer- und regelungstechnische Aufwand zur Erzeugung derartiger Belastungsmuster soll möglichst gering gehalten werden.

Die Lösung der der Erfindung zugrunde liegenden Aufgabe ist im Anspruch 1 und 4 angegeben. Den Erfindungsgedanken vorteilhaft weiterbildende Merkmale sind Gegenstand der Unteransprüche sowie der Beschreibung unter Bezugnahme auf die Ausführungsbeispiele zu entnehmen.

Ausgehend von einer eingangs erläuterten Vorrichtung zur dynamischen Belastungsprüfung einer Probe, mit einem Lager, mit dem die Probe mittelbar oder unmittelbar lösbar fest verbindbar ist, sowie einem Gegenlager, das über wenigstens ein Aktorelement mit der Probe derart in Wirkverbindung bringbar ist, dass das wenigstens eine Aktorelement dynamische mechanische Belastungen in die Probe einleitet, die längs eines zwischen dem Lager und dem Gegenlager gerichteten und durch die Probe verlaufenden Lastpfades (A) wirken, wobei das wenigstens eine Aktorelement ein multifunktionales Festkörperwandlerwerkstoffsystem aufweist, das durch Energiezufuhr Deformationen erfährt, die ursächlich oder zumindest mitursächlich für die innerhalb der Probe auftretenden mechanischen Belastungen sind, zeichnet sich die Vorrichtung lösungsgemäß jeweils durch eine besondere Ausbildung des Aktorelementes aus, das in zwei alternativen Bauformen ausgestaltet werden kann:

### Eine erste lösungsgemäße Ausbildungsalternative eines Aktorelementes verfügt über folgende Komponenten:

Ein Basisanschlusselement ist mit dem Gegenlager und ein Lastanschlusselement mittel- oder unmittelbar ist mit der Probe verbunden. Zwischen dem Basisanschlusselement und dem Lastanschlusselement ist ein, den multifunktionalen Festkörperwandierwerkstoff aufweisendes Energiewandlersystem vorgesehen, wobei das Energiewandlersystem eine in Richtung des Lastpfades (A) orientierte Vorzugsrichtung aufweist. Überdies ist mindestens ein sich zwischen dem Basisanschlusselement und dem Lastanschlusselement erstreckendes Vorspannelement vorgesehen, wobei das Vorspannelement eine mechanische Vorlast auf das Energiewandlersystem ausübt. Ferner ist mindestens ein sich zwischen dem Basisanschlusselement und dem Lastanschlusselement erstreckendes Schubableitungselement vorgesehen, wobei das Schubableitungselement ein rechtwinklig zur Vorzugsrichtung angeordnetes zweidimensionales Element aufweist, insbesondere in Form einer Membran oder Blattfeder. Das Basisanschlusselement ist über mindestens ein Verbindungselement mit dem zweidimensionalen Element und diese über mindestens ein zweites Verbindungselement mit dem das Lastanschlusselement verbunden, wobei das erste und zweite Verbindungselement an nicht miteinander überlappenden Bereichen in Projektion zum Lastpfad (A) mit dem zweidimensionalen Element verbunden sind.

In vorteilhafter Weise wird die Funktion des Vorspannelements sowie des Schubableitungselements durch ein und dasselbe Bauteil übernommen.

### Eine zweite lösungsgemäße Ausbildungsalternative des Aktorelementes verfügt über die folgenden Komponenten:

Ein Basisanschlusselement ist mit dem Gegenlager und ein Lastanschlusselement mittel- oder unmittelbar ist mit der Probe verbunden. Wenigstens ein Abstützelement ist über wenigstens eine Vorspanneinrichtung mit dem Basisanschlusselement verbunden. Zwischen mindestens einem auf dem Basisanschlusselement liegenden Angriffspunkt und mindestens einem auf dem Lastenschlusselement liegenden Angriffspunkt erstreckt sich mindestens ein erstes Energiewandler-System, das einen multifunktionalen Festkörperwandlerwerkstoff aufweist. Ferner erstreckt sich zwischen mindestens einem auf dem Abstützelement liegenden Angriffspunkt und mindestens einem auf dem Lastanschlusselement liegenden Angriffspunkt mindestens ein zweites Energiewandler System, das einen multifunktionalen Festkörperwandlerwerkstoff aufweist. Hierbei ist das Basisanschlusselement mit dem mindestens einen Abstützelement über die mindestens eine Vorspanneinrichtung derart verbunden, dass durch die Vorspanneinrichtung eine Vorlast auf das erste und das zweite Energiewandler-System wirkt. Dabei weist das Lastanschlusselement einen in einem Zwischenraum zwischen dem Basisanschlusselement und dem Abstützelement liegenden Teil und einen außerhalb des Zwischenraums zwischen dem Basisanschlusselement und dem Abstützelement liegenden Teil auf. Vorzugsweise weist die Vorspanneinrichtung ein die Energiewandler-Systeme umschließendes Rohr auf.

Besonders geeignet unter der Gruppe multifunktionaler Festkörperwandlerwerkstoffe sind piezokeramische, elektro- oder magnetostriktive Materialien, die unter dem Einfluss eines gut steuerbaren magnetischen oder elektrischen Feldes eine Zustands- oder Formänderung erfahren, die als Weg- oder Kraftwirkung gezielt genutzt werden kann. Der multifunktionale Werkstoff-spezifische Prozess zeichnet sich durch eine sehr hohe Dynamik, mechanische Verschleissfreiheit und Stellgenauigkeit aus und kann im Rahmen eines geeignet ausgebildeten Aktors zu einer Längen- oder Kraftänderung genutzt werden, ähnlich dem Aufbau einer Belastungseinheit unter Nutzung eines servohydraulischen Aktorprinzips, jedoch mit dem Unterschied einer weitaus verbesserten Verschleissfreiheit, Ansteuerbarkeit sowie dem Erreichen strukturakustischer Belastungsfrequenzen in Form sinusförmiger oder davon abweichender Wechseibeiastungsmuster.

Wie der weiteren Beschreibung unter Bezugnahme auf diverse Ausführungsbeispiele zu entnehmen ist, sind hochdynamische Belastungsprüfvorrichtungen, sowohl bestehend ausschließlich aus einem, einen multifunktionalen Festkörperwandlerwerkstoff aufweisenden Aktor realisierbar, als auch hybrid aufgebaute Belastungsprüfvorrichtungen denkbar, in denen sowohl ein Aktor nach konventioneller Bauart zur Erzeugung von Wechselbelastungen mit subakustischer Belastungsfrequenzen sowie ein hochdynamischer Aktor in Form der lösungsgemäßen Ausbildung unter Einsatz eines multifunktionalen Festkörperwandlerwerkstoffes vorgesehen ist, mit dem Wechselbelastungen mit hohen Dynamiken, d.h. Wechselbelastungsfrequenzen größer 1000 Hz mit frei generierbaren Wechselbelastungsmustem, (mit der Möglichkeit der Abweichung von sinusförmigen Belastungen) erzeugbar sind.

Aufgrund der den Festkörperwandlerwerkstoffen, beispielsweise piezokeramischen Materialien, innewohnenden hohen Materialsteifigkeit können derartige Aktormaterialien direkt in den Lastpfad der Prüfvorrichtung integriert werden, um durch entsprechende kontrolliert gesteuerte Längenänderung Druck- und/oder Zugkräfte und/oder Torsionskräfte und/oder Biegungen und/oder Schubkräfte in die längs des Lastpfades vorgesehene, zumeist zwischen einem Lager und Gegenlager eingespannte Probe direkt einzuleiten.

Aufgrund der vorstehend beschriebenen Eigensteifigkeit erlauben multifunktionale Festkörperwandlerwerkstoffe insbesondere im Einsatz hybrid aufgebauter Belastungsprüfvorrichtungen, wie vorstehend angedeutet, seriell oder parallel zu einer an sich bekannten Aktoreinheit längs des Lastpfades integriert zu werden. Auf diese Weise läßt sich der Frequenzbereich der durch konventionelle Aktorsysteme, beispielsweise unter Einsatz servohydraulischer oder servopneumatischer Systeme erzielbar ist, deutlich hin zu höheren Prüffrequenzen erweitern. So ist es möglich, die experimentelle Strukturbewertung von Proben oder technischen Bauteilen hinsichtlich ihrer Betriebsfestigkeit und Kenndatenermittlung sowie strukturdynamischer und strukturakustischer Charakterisierung stark zu erweitern.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierter Aufbau einer Belastungsprüfvorrichtung mit einem hochdynamischen Aktor im Lastpfad,
- Fig. 2: schematisierte Darstellung einer Belastungsprüfvorrichtung mit konventionellem Aktor sowie einem hochdynamischen Aktor im Kraftfluss,
- Fig. 3: schematisierte Darstellung einer Belastungsprüfvorrichtung mit konventionellem Aktor, erweitert durch einen parallel zum Lastpfad wirkenden hochdynamischen Aktor,
- Fig. 4: Ausführungsbeispiel eines hochdynamischen Belastungsaktors,
- Fig. 5 + 6: Querschnitts- und Explosionsdarstellung eines hochdynamischen Belastungsaktors,
- Fig. 7: perspektivische Schnittdarstellung eines hochdynamischen Belastungsaktors sowie
- Fig. 8 + 9: weitere Ausführungsbeispiele für einen hochdynamischen Belastungsaktor.

### Wege zur Ausführung der Erfindung, gewerbliche Verwendbarkeit

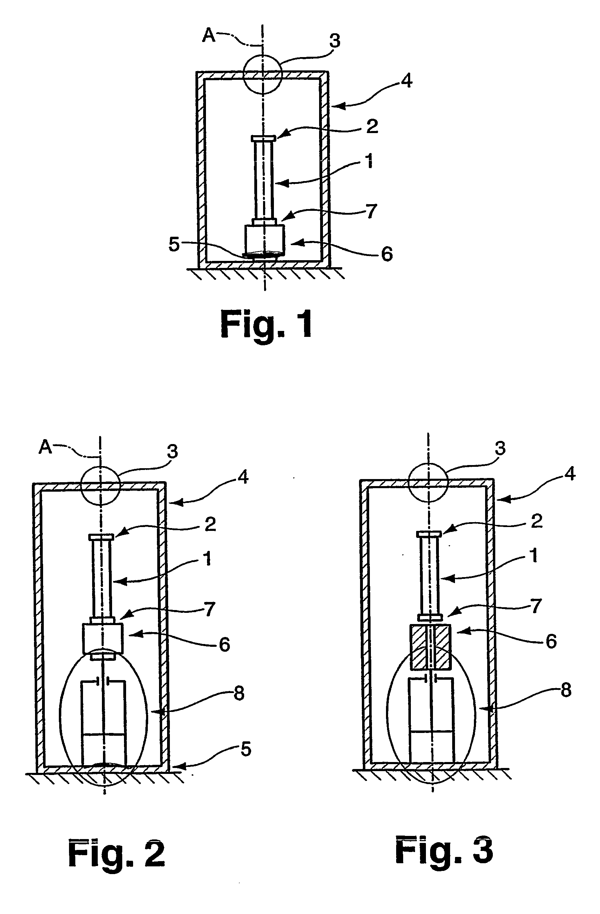

In Figur 1 ist in schematisierter Darstellung eine Vorrichtung zur dynamischen Belastungsprüfung einer Probe 1 dargestellt, die eine längliche Form aufweist und einseitig über eine lösbar feste Schnittstelle 2 mit einem Lager 3 verbunden ist. Der Begriff "Lager" bedeutet einen raumfesten Befestigungspunkt, der im gezeigten Ausführungsbeispiel im oberen Bereich eines stabil ausgebildeten Prüf- bzw. Befestigungsrahmen 4 vorgesehen ist. Der Prüfrahmen 4 ist als eine in sich geschlossene Rahmenkonstruktion ausgebildet und weist zu dem im Prüfrahmen 4 oben gelegenen Lager 3 ein entgegengesetzt unten liegendes Gegenlager 5 auf, an dem ein hochdynamisches Aktorelement 6 befestigt ist, vorzugsweise in Form einer lösbar fest Verbindung. Das hochdynamische Aktorelement 6 ist ferner mit der Probe 1 im Lastpfad A über eine, der Schnittstelle 2 gegenüberliegende Schnittstelle 7, die ebenfalls als lösbar feste Verbindung ausgebildet ist, verbunden.

Der Einfachheit halber sei angenommen, dass das schematisiert dargestellte Aktorelement 6 vollständig oder in Teilbereichen aus einem multifunktionalen Festkörperwandlerwerkstoff, vorzugsweise aus einer Piezokeramik, besteht. Der Festkörperwandlerwerkstoff ist zu Zwecken einer elektrischen Energiezufuhr mit einer Wechselspannungsquelle U oder Wechselstromquelle I verbunden. Der piezokeramische Werkstoff innerhalb des hochdynamischen Aktorelementes 6 ist derart orientiert, dass durch elektrische Energiezufuhr die Piezokeramik Längenänderungen in Form von Materialausdehnungen sowie -schrumpfungen längs des Lastpfades A erfährt, wodurch die zwischen beiden Schnittstellen 2 und 7 eingespannte Probe in Abhängigkeit der Längenänderung der Piezokeramik gestaucht bzw. gedehnt wird.

Im Gegensatz zu konventionellen Aktorelementen, die auf dem servohydraulischen oder servopneumatischen Wirkprinzip beruhen und eine Vielzahl mechanisch zusammen wirkender Einzelkomponenten umfasst, weist das hochdynamische Aktorelement keinerlei bewegliche und somit wartungsunterworfene Komponenten auf. Vielmehr beruht der die Längenänderung der Piezokeramik hervorrufende Effekt auf Material intrinsische Zustandsänderungen die spontan, Trägheits- und verschleissfrei in kontrollierbarer Weise auftreten.

Neben dem Einsatz piezoelektrischer Keramiken, deren Längenänderungen in Gegenwart elektrischer Felder induzierbar sind, können gleichsam elektro- oder magnetostriktive Materlalien, wie bspw. Keramiken oder Metalle, eingesetzt werden, deren Deformationsvermögen auf der Änderung elektrischen oder magnetischen Felder beruht. Schließlich ist auch der Einsatz von Formgedächtnislegierungen (Formgedächtnismaterialien) denkbar, die durch gezielte äußere thermische Energiezufuhr ihre Formgebung zu ändern vermögen. Das Deformationsverhalten der letztgenannten Materialgruppe unter den multifunktionalen Festkörperwandlerwerkstoffen unterliegt jedoch größeren Zeitkonstanten, so dass ihr Einsatz zur Realisierung hochdynamischer Aktorelemente grundsätzlich möglich ist, zur Zeit technisch jedoch begrenzte Prüfdynamiken erwarten lässt.

Neben der Realisierung hochdynamischer Belastungsprüfvorrichtungen, deren einziges die Wechselbelastung hervorrufendes Aktorelement einen multifunktionalen Festkörperwerkstoff aufweist, wie vorstehend erläutert, eignet sich ein derartig ausgebildeter Aktor mit einem an sich bekannten, konventionellen Aktor, beispielsweise mit einem servohydraulischen Aktorelement zu kombinieren.

Ein derartiges Ausführungsbeispiel ist in Figur 2 dargestellt. Wieder befindet sich eine Probe 1 innerhalb eines Prüfrahmens 4, einerseits eingespannt über eine lösbar feste Schnittstelle 2 mit einem Lager 3 und andererseits verbunden über eine Schnittstelle 7 mit einem hochdynamischen Aktorelement 6. Im Lastpfad A dem Aktorelement 6 nach unten unmittelbar folgend ist ein konventionelles Aktorelement 8, beispielsweise basierend auf den servohydraulischen, servomechanischem oder pneumatischen Wirkprinzip, vorgesehen. Das an sich bekannte Aktorelement 8 ist mit dem Prüfrahmen 4 verbunden, der als Gegenlager 5 dient. Das hochdynamische Aktorelement 6 sowie das an sich bekannte Aktorelement 8 sind seriell hintereinander längs des Lastpfades A angeordnet und wirken in überlagernder Weise auf die Probe 1 ein. Mit der in Figur 2 dargestellten seriellen Hybridanordnung zweier Aktorelemente 6, 8 können Belastungsfrequenzen in Form dynamischer Zug- und Druckkräfte innerhalb der Probe eingeleitet werden, die das gesamte Belastungsspektrum umfassen. So werden die Wechselbelastungen im unteren Frequenzbereich durch das Aktorelement 8 nach konventioneller Bauart, sowie Wechselbelastungen mit Belastungsfrequenzen im strukturakustischen Bereich, d.h. Belastungsfrequenzen oberhalb des Frequenzbereichs von Aktorelement 8 nach konventioneller Bauart d.h. z.B. > 1000 Hz, bis in den akustischen Bereich und darüber hinaus, durch das den multifunktionalen Festkörperwandlerwerkstoff aufweisende Aktorelement 6 erzeugt.

Im Ausführungsbeispiel gemäß Figur 3 ist ebenfalls eine hybrid aufgebaute dynamische Belastungsprüfvorrichtung dargestellt, bei der die Probe 1 gleichsam den vorstehenden Ausführungsbeispielen einerseits über die Schnittstelle 2 mit dem Lager 3 des Prüfrahmens 4 und andererseits über die Schnittstelle 7 sowohl mit dem hochdynamischen Aktorelement 6 als auch mit einem Aktorelement 8 konventioneller Bauart verbunden ist. Im Unterschied zum Ausführungsbeispiel gemäß Figur 2 wirken im Ausführungsbeispiel gemäß Figur 3 die Aktorelemente 6 und 8 parallel auf die Probe mit einem einheitlichen Kraftfluss längs des Lastpfades A ein.

Die vorstehend gezeigten Ausführungsbeispiele verdeutlichen den modularen Aufbau einer dynamischen Belastungsprüfvorrichtung, die eine einachsige hochdynamische Belastung für eine Probe zu generieren in der Lage ist. Grundsätzlich ist es möglich, bereits bestehende konventionelle Prüfvorrichtungen durch den seriellen oder parallelen Einsatz eines lösungsgemäß angegebenen hochdynamischen Aktorelementes 6 modular zu ergänzen, wodurch die bisher üblichen Prüffrequenzen bis in den strukturakustischen Bereich hinein und darüber hinaus erweitert werden können.

In den nachfolgenden Figuren werden lösungsgemäß ausgebildete hochdynamische Aktorelemente beschrieben, die sich besonders für den Einsatz in hochdynamischen Belastungsprüfvorrichtungen eignen.

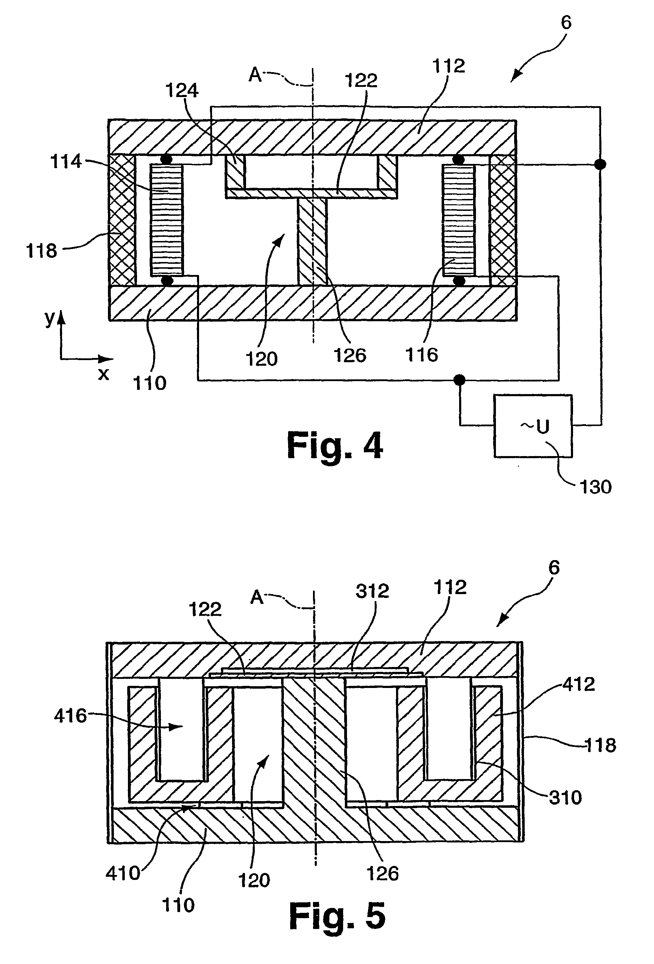

Fig. 4 zeigt eine Ausführungsform eines Aktorelementes 6 zum kontrollierten Erzeugen mechanischer Schwingungen, durch die Zug- und Druckkräfte in eine Probe längs eines Lastpfades A eingekoppelt werden können. Das Aktorelement 6 weist ein Basisanschlusselement 110 und ein Lastanschlusselement 112 auf. Beide Elemente 110 und 112 dienen als Verbindungsschnittstetten zur Probe bzw. zum Gegenlager, d.h. an das Basisanschlusselement 110 ist das Gegenlager 5 und an das Lastanschlusselement 110 ist die Probe 1 ankoppelbar (nicht dargestellt).

Zwischen dem Basisanschlusselement 110 und dem Lastanschlusselement 112 erstreckt sich jeweils ein aus piezoelektrischen Wandlerwerkstoff bestehender Aktor 114, 116. Das Basisanschlusselement 110 und das Lastanschlusselement 112 sind durch ein rohrförmiges Vorspannelement 118 aus PVC verbunden, welches einen Druck (Vorlast) auf den piezoelektrischen Aktor 114, 116 ausübt. Weiterhin ist das Basisanschlusselement 110 mit dem Lastanschlusselement 112 durch ein Schubableitungselement 120 verbunden. Das Schubableitungselement 120 weist eine Membran 122 in Form einer kreisförmigen, dünnen, aus Federblech gearbeiteten Scheibe auf. Entlang ihrem Umfang ist diese Membran 122 durch ein kreisringförmiges Verbindungselement 124 mit dem Lastanschlusselement 112 verbunden. Die Mitte der Membran 122 ist über ein zweites, zylinderförmiges Verbindungselement 126 mit hohem Schubmodul bei Scherung in Richtung senkrecht zur y-Achse mit dem Basisanschlusselement 110 verbunden.

Durch das beschriebene Schubableitungselement 120 wird jeweils der piezoelektrische Aktor 114, 116 vor Krafteinwirkungen senkrecht zu seiner Vorzugsrichtung (y-Richtung in Fig. 4) geschützt. Die Membran 122 weist in y Richtung eine hohe Flexibilität auf, senkrecht dazu (beispielsweise in x-Richtung) hingegen eine hohe Steifigkeit.

Die piezoelektrischen Aktoren 114, 116 werden durch das Vorspannelement 118 unter ständiger Vorspannung gehalten, welche so eingestellt ist, dass die piezoelektrischen Aktoren 114, 116 je nach Bauart optimal arbeiten und vor Belastungen wie Zug, Biegung, Torsion, Schub geschützt sind. Das Vorspannelements 118 ist rohrförmig ausgestaltet und umschließt die piezoelektrischen Aktoren 114, 116 vollständig, wodurch keine Feuchtigkeit oder Schmutz an die piezoelektrischen Aktoren 114, 116 gelangen kann.

Weiterhin sind die piezoelektrischen Aktoren 114, 116 gegen direkte mechanische Einwirkungen, beispielsweise gegen Schläge, geschützt. Alternativ kann jedoch auch auf das rohrförmige Vorspannelement 118 verzichtet werden. In diesem Fall (nicht dargestellt) übernimmt das Schubableitungselement 120 gleichzeitig die Aufgabe der Vorspannung der piezoelektrischen Aktoren 114, 116. Die Länge des Verbindungselements 126 wird in diesem Fall so eingestellt (beispielsweise durch entsprechendes Verkürzen), dass die Länge des Schubableitungselements 120 im Ruhezustand geringer ist als die Länge der piezoelektrischen Aktoren 114, 116. Dadurch wird ein Druck auf die piezoelektrischen Aktoren 114, 116 ausgeübt.

Zur Schwingungsanregung sind beide piezoelektrische Aktoren 114, 116, jeweils mit einer elektrischen Wechselspannungs- oder Stromquelle 130 verbunden, durch deren elektrisches Wechselpotential U oder I die Aktoren 114, 116 kontrolliert zu Längenänderungen gezwungen werden, wodurch das Basisanschlusselement 110 und das Lastanschlusselement 112 alternierende Lageänderungen bezüglich der y-Achse erfahren, die letztlich Zug- und Druckkräfte innerhalb der Probe hervorrufen.

Werden die Aktoren 114, 116 symmetrisch und synchron ausgelenkt, so werden ausschließlich parallel zum Lastpfad A gerichtete Kräfte generiert, durch die die Probe uniaxial gedehnt und gestaucht wird. Durch asynchrones und unsymmetrisches Ansteuern der Aktoren 114, 116 können jedoch auch zusätzliche um den Lastpfad A gekippte Kraftmomente oder um den Lastpfad A rotierende Kraftmomente erzeugt werden. Zu diesem Zweck ist es erforderlich, dass die piezoelektrischen Aktoren 114, 116 elektrisch unterschiedlich angesteuert werden und sich somit unterschiedlich ausdehnen. Das Lastanschlusselement 112 wird dann relativ zum Basisanschlusselement 110 verkippt und kann bei entsprechender Ansteuerung eine Kippschwingung ausführen. Entsprechend lassen sich durch Vorsehen weiterer piezoelektrischer Aktoren, die ringförmig um den Lastpfad A angeordnet sind, Drehschwingungen, Verkippungen bzw. Taumelbewegungen generieren.

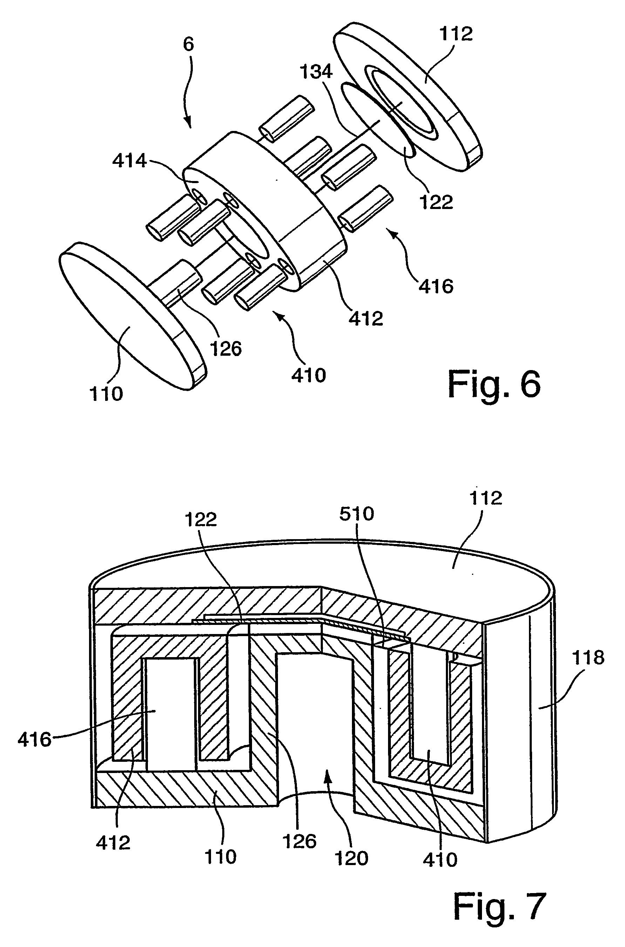

In Fig. 5 (Schnittdarstellung) und Fig. 6 (Explosionsdarstellung) ist ein zylinderförmiges Aktorelement entsprechend einem bevorzugten, zu Fig. 4 alternativen, Ausführungsbeispiel dargestellt. Das Aktorelement 6 weist ein Basisanschlusselement 110, ein Lastanschlusselement 112, ein rohrförmiges Vorspannelement 118 und ein Schubableitungselement 120 mit einem zylinderförmigen Verbindungselement 126 und einer kreisförmigen Metallmembran 122 auf. Die Funktionsweise der Schubableitung ist identisch zu jener der in Fig. 4 dargestellten Ausführungsform. In diesem Ausführungsbeispiel ist jedoch das piezoelektrische Aktorsystem zweigeteilt: Ein aus vier ringförmig um die Symmetrieachse bzw. den Lastpfad A angeordneten Aktoren bestehendes erstes piezoelektrisches Aktorsystem 410 erstreckt sich zwischen dem Basisanschlusselement 110 und einem zwischen dem Basisanschlusselement 110 und dem Lastanschlusselement 112 angeordneten Koppelelement 412. Dieses Koppelelement 412 ist in Form eines Kreisrings ausgestaltet. In die untere, flache Seite des Koppelelements 412 sind vier entsprechende, zum Basisanschlusselement 110 hin offene Sacklochbohrungen 414 eingelassen, in welche die piezoelektrischen Aktoren des ersten piezoelektrischen Aktorsystems 410 eingeführt werden.
Ein zweites piezoelektrisches Aktorsystem 416 erstreckt sich entsprechend zwischen dem Lastanschlusselement 112 und dem Koppelelement 412. Wiederum besteht das zweite piezoelektrische Aktorsystem 416 aus vier einzelnen piezoelektrischen Aktoren, welche symmetrisch um die Symmetrieachse/Lastpfad A angeordnet sind, wobei das piezoelektrische Aktorsystem 416 relativ zur Anordnung des piezoelektrischen Aktorsystems 410 um 45° gedreht ist. Auch das zweite piezoelektrische Aktorsystem 416 ist teilweise in entsprechende, zum Lastanschlusselement 112 hin geöffnete Sacklochbohrungen 310 in der oberen, ebenen Fläche des Koppelelements 412 eingeführt.

Da die Sacklochbohrungen 310 und 414 jeweils um 45 Grad verdreht angeordnet sind, überlappen das erste und das zweite piezoelektrische Aktorsystem 410, 416. Der Abstand zwischen Basisanschlusselement 110 und Lastanschlusselement 112 ist also geringer als die Summe der Baulänge eines piezoelektrischen Aktors des ersten piezoelektrischen Aktorsystems 410 und der Baulänge eines piezoelektrischen Aktors des zweiten piezoelektrischen Aktorsystems 416. Dies bewirkt, dass der Hub der Schnittstelle bei gleich bleibendem Abstand zwischen Basisanschlusselement 110 und Lastanschlusselement 112 vergrößert ist im Vergleich zu einer Schnittstelle ohne Koppelelement 412.

Die Fixierung der Membran 122 am Lastanschlusselement 112 erfolgt in diesem Ausführungsbeispiel ähnlich zu dem in Fig. 4 gezeigten Beispiel, wobei jedoch auf das kreisringförmige Verbindungselement 124 verzichtet wurde. Stattdessen ist in das Lastanschlusselement 112 eine flache, zylindrische Einfräsung 312 eingelassen, über der die Membran 122 aufgespannt ist. Die Membran 122 ist entlang ihrem Rand mit dem Lastanschlusselement 112 verklebt.

In Fig. 7 ist eine weitere alternative Ausgestaltung eines Aktorelements zur Schwingungserregung in perspektivischer Teildarstellung mit ausgeschnittenem Segment dargestellt. Der Aufbau ist grundsätzlich ähnlich zu den in Fig. 5 und Fig. 6 dargestellten Beispielen. Jedoch ist in dieser Ausführung das Verbindungselement 126 des Schubableitungselements 120 als Hohlzylinder ausgeführt. Dies bewirkt eine weitere Raumersparnis, da sich im Hohlraum des Verbindungselements 126 beispielsweise eine Steuerungseinheit (z. B. für eine aktive Schwingungskontrolle) unterbringen lässt. Die Membran 122 zur Schubableitung ist mittig mit dem Verbindungselement 126 verschraubt. Weiterhin ist in Fig. 7 ein Zentrierelement 510 in Form einer weiteren kreisförmigen Metallmembran dargestellt. Entlang ihrem Umfang ist diese Membran mit dem kreisringförmigen Koppelelement 412 verklebt. In ihrer Mitte ist die Membran 510 mit dem Verbindungselement 126 zum Basisanschlusselement 110 verschraubt. Die Membran verhindert eine Lageänderung des Koppelelements 412 gegenüber dem Verbindungselement 126 senkrecht zur Vorzugsrichtung, erlaubt jedoch eine Verschiebung des Koppelelements 412 in Vorzugsrichtung längs des Lastpfades A.

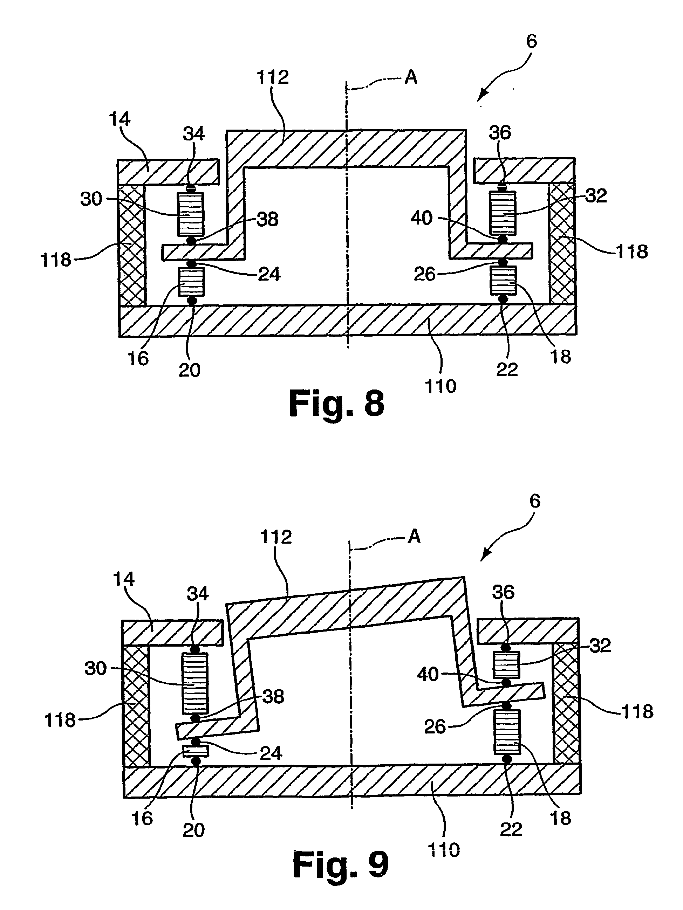

In Fig. 8 ist eine weitere bevorzugte Ausführung eines Aktorelementes 6 dargestellt. Ein Basisanschlusselement 110 ist über eine Vorspanneinrichtung 120 mit einem Abstützelement 14 verbunden. Ein erstes Energiewandler System, welches aus den Piezo-Aktoren 16 und 18 besteht, erstreckt sich zwischen den Angriffspunkten 20 bzw. 22 auf dem Basisanschtussetement 110 und den Angriffspunkten 24 bzw. 26 auf dem Lastanschlusselement 112. Ein zweites Energiewandler- System, welches aus den Piezo-Aktoren 30 und 32 besteht, erstreckt sich zwischen den Angriffspunkten 34 bzw. 36 auf dem Abstützelement 14 und den Angriffspunkten 38 bzw. 40 auf dem Lastanschlusselement 112.

Die dargestellte Anordnung zeigt lediglich einen Querschnitt durch das strukturmechanische Aktorelement 6. Die Anordnung dieses Beispiels ist bis auf die Piezo-Aktoren 16, 30, 18, 32 symmetrisch zur eingezeichneten Symmetrieachse, die zugleich dem Lastpfad A entspricht. Bei dem Basisanschlusselement 110 handelt es sich also um eine Kreisscheibe, bei dem Abstützelement 14 um eine Ringscheibe. Das Lastanschlusselement 112 weist eine zylinderhutförmige Gestalt auf, wobei sich ein Teil des Lastanschlusselements 112 im Zwischenraum zwischen der Vorspanneinrichtung 118 und dem Basisanschlusselement 110 befindet und ein Teil außerhalb. Die Vorspanneinrichtung 118 besteht aus einem elastischen Rohr mit zum Außendurchmesser der Kreisscheibe des Basisanschlusselements 110 und zum Außendurchmesser der Ringscheibe des Abstützelements 14 identischem Durchmesser. Die Vorspannung erfolgt dadurch, dass die Länge des elastischen Rohrs so gewählt wird, dass das Rohr im Ruhezustand der Anordnung gedehnt wird. Dadurch wird gleichzeitig auf alle Piezo-Aktoren eine Druckvorspannung ausgeübt.

Anstelle der dargestellten vier Piezo-Aktoren können auch mehr als vier Aktoren verwendet werden. Vorzugsweise sind diese Piezo-Aktoren rotationssymmetrisch zur Symmetrieachse/Lastpfad A angeordnet.

Das Basisanschlusselement 110 und das Lastanschlusselement 112 sind so ausgestaltet, dass eine einfache und schnelle Montage des Aktorelementes 6 bspw. zwischen einem Gegenlager 5 und der Probe 1 (siehe bspw. Figur 1) erfolgen kann.

Werden die Piezo-Aktoren 16 und 18 durch gleichartige elektrische Ansteuerungen verlängert und die Piezo-Aktoren 30 und 32 in gleichem Maße durch geeignete elektrische Ansteuerungen verkürzt, so wird der Abstand zwischen dem Lastanschlusselement 112 und dem Basisanschlusselement 110 vergrößert. Entsprechend wird durch eine Verkürzung der Piezo-Aktoren 16 und 18 und eine gleichzeitige Verlängerung der Piezo-Aktoren 30 und 32 der Abstand zwischen Lastanschlusselement 112 und Basisanschlusselement 110 verringert. Die elektrischen Ansteuerungen der Piezo-Aktoren sind in der Figur nicht weiter dargestellt, setzen jedoch jeweils einen geeigneten Anschluss mit einer Wechselspannungsquelle voraus.

Werden die Piezo-Aktoren 16 und 30 sowie 18 und 32 jeweils gegenphasig, z. B. mit einer sinusförmigen Wechselspannung geeigneter Amplitude und Frequenz angesteuert, so schwingt das Lastanschlusselement 112 relativ zum Basisanschlusselement 110 auf und ab.

In Fig. 9 ist dargestellt, wie durch eine gezielte Ansteuerung der Piezo-Aktoren 16, 18, 30, 32 der Anordnung in Fig. 8 auch Kippschwingungen des Basisanschlusselements 110 gegenüber dem Lastanschlusselement 112 angeregt werden können. Indem der Piezo-Aktor 30 durch ein geeignetes elektrisches Ansteuersignal auf eine größere Länge eingestellt wird als der Piezo-Akttor 32 und entsprechend der Piezo-Aktor 16 auf eine geringere Länge als der Piezo-Aktor 18, wird das Lastanschlusselement 112 relativ zur Ebene des Basisanschlusselements 110 gekippt. Dazu benötigen die Piezo-Aktoren 16, 18, 30, 32 individuelle elektrische Ansteuerungen (nicht gezeigt).

### Bezugszeichenliste

- 1: Probe
- 2: Schnittstelle
- 3: Lager
- 4: Prüfrahmen, Befestigungsrahmen
- 5: Gegenlager
- 6: Hochdynamischer Belastungsaktor, Aktorelement
- 7: Schnittstelle
- 8: Konventionelles Aktorelement
- 14: Abstützelement
- 16: Piezo-Aktoren
- 18: Piezo-Aktoren
- 20: Angriffspunkt
- 22: Angriffspunkt
- 24: Angriffspunkt
- 26: Angriffspunkt
- 30: Piezo-Aktoren
- 32: Piezo-Aktoren
- 34: Angriffspunkt
- 36: Angriffspunkt
- 38: Angriffspunkt
- 40: Angriffspunkt
- 110: Basisanschlusselement
- 112: Lastanschlusslement
- 114: Piezoelektrischer Aktor
- 116: Piezoelektrischer Aktor
- 118: Vorspanneinrichtung
- 120: Schubableitungselement
- 122: Membran
- 124: Verbindungselement
- 126: Verbindungselement
- 130: Wechselspannungsquelle
- 310: Sacklochbohrung
- 312: Zylindrische Einfräsung
- 410: Erstes piezoelektrisches Aktorsystem
- 412: Koppelelement
- 414: Sacklochbohrung
- 416: Zweites piezoelektrisches Aktorsystem
- 510: Zentrierelement

## Patentansprüche

1. Vorrichtung zur dynamischen Belastungsprüfung einer Probe (1) mit einem Lager (3), mit dem die Probe (1) mittelbar oder unmittelbar lösbar fest verbindbar ist, sowie einem Gegenlager (5), das über wenigstens ein Aktorelement (6) mit der Probe (1) derart in Wirkverbindung bringbar ist, dass das wenigstens eine Aktorelement (6) dynamische mechanische Belastungen in die Probe (1) einleitet, die längs eines zwischen dem Lager (3) und dem Gegenlager (5) gerichteten und durch die Probe (1) verlaufenden Lastpfades (A) wirken, und dass das wenigstens eine Aktorelement (6) ein multifunktionales Festkörperwandlerwerkstoffsystem aufweist, das durch Energiezufuhr Deformationen erfährt, die ursächlich oder zumindest mitursächlich für die innerhalb der Probe (1) auftretenden mechanischen Belastungen sind,
**dadurch gekennzeichnet, dass** das das multifunktionale Festkörperwandlerwerkstoffsystem aufweisende Aktorelement folgende Komponenten aufweist:
a) ein Basisanschlusselement (110),
b) ein Lastanschlusselement (112),
c) mindestens ein sich zwischen dem Basisanschlusselement (110) und dem Lastanschlusselement (112) erstreckendes, einen multifunktionalen Festkörperwandierwerkstoff aufweisendes Energiewandlersystem (114, 116; 410, 416), wobei das Energiewandlersystem (114, 116; 410, 416) eine in Richtung des Lastpfades (A) orientierte Vorzugsrichtung aufweist;
d) mindestens ein sich zwischen dem Basisanschlusselement (110) und dem Lastanschlusselement (112) erstreckendes Vorspannelement (118), wobei das Vorspannelement (118) eine mechanische Vorlast auf das Energiewandlersystem (114 116; 410, 416) ausübt,
e) mindestens ein sich zwischen dem Basisanschlusselement (110) und dem Lastanschlusselement (112) erstreckendes Schubableitungselement (120),
e1) wobei das Schubableitungselement ein rechtwinklig zur Vorzugsrichtung angeordnetes zweidimensionales Element (122), insbesondere eine Membran oder Blattfeder, aufweist, die in Richtung des Lastpfades flexibel und senkrecht dazu steif ist,
e2) wobei das Basisanschlusselement (110) über mindestens ein Verbindungselement (126) mit dem zweidimensionalen Element (122) verbunden ist;
e3) wobei das Lastanschlusselement (112) über mindestens ein zweites Verbindungselement (124) mit dem zweidimensionalen Element (122) verbunden ist,
e4) wobei das erste und zweite Verbindungselement (124, 126) an nicht miteinander überlappenden Bereichen in Projektion zum Lastpfad (A) mit dem zweidimensionalen Element (122) verbunden sind, und
e5) wobei das Basisanschlusselement (110) mit dem Gegenlager (5) und das Lastanschlusselement (112) mittel- oder unmittelbar mit der Probe (1) verbunden sind.

2. Vorrichtung nach Anspruch 1,
**dadurch gekennzeichnet, dass** die Funktion des Vorspannelements (118) und des Schubableitungselements (120) durch dasselbe Bauteil (120) übernommen wird.

3. Vorrichtung nach Anspruch 1 oder 2,
**dadurch gekennzeichnet, dass** das Energiewandlersystem (114, 116; 410, 416) mindestens zwei jeweils einen multifunktionalen Festkörperwandlerwerkstoff aufweisende Teilsysteme (410, 416) sowie ein Koppelelement (412) vorsieht,
- wobei sich mindestens ein erstes Teilsystem (410) zwischen dem Basisanschlusselement (110) und dem Koppelelement (412) erstreckt; und
- wobei sich mindestens ein zweites Teilsystem (416) zwischen dem Koppelelement (412) und dem Lastanschlusselement (112) erstreckt.

4. Vorrichtung nach dem Oberbegriff des Anspruches 1,
**dadurch gekennzeichnet, dass** das den multifunktionalen Festkörperwandlerwerkstoff aufweisende Aktorelement folgende Komponenten aufweist:
- ein Basisanschlusselement (110),
- ein Lastanschlusselement (112) und
- mindestens ein Abstützelement (14)
wobei
- sich zwischen mindestens einem auf dem Basisanschlusselement (110) liegenden Angriffspunkt (20, 22) und mindestens einem auf dem Lastenschlusselement liegenden Angriffspunkt (24, 26) mindestens ein erstes Energiewandler-System (16, 18) erstreckt, das einen multifunktionalen Festkörperwandlerwerkstoff aufweist;
- sich zwischen mindestens einem auf dem Abstützelement (14) liegenden Angriffspunkt (34, 36) und mindestens einem auf dem Lastanschlusselement (112) liegenden Angriffspunkt (38, 40) mindestens ein zweites Energiewandler System (30, 32) erstreckt, das einen multifunktionalen Festkörperwandlerwerkstoff aufweist;
- das Basisanschlusselement (110) mit dem mindestens einen Abstützelement (14) über mindestens eine Vorspanneinrichtung (118) derart verbunden ist, dass durch die Vorspanneinrichtung (118) eine Vorlast auf das erste und das zweite Energiewandler-System (16, 18), (30, 32) wirkt,
- das Lastanschlusselement (112) einen in einem Zwischenraum zwischen dem Basisanschlusselement (110) und dem Abstützelement (14) liegenden Teil und einen außerhalb des Zwischenraums zwischen dem Basisanschlusselement (110) und dem Abstützelement (14) liegenden Teil aufweist, und
- das Basisanschlusselement (110) mit dem Gegenlager (5) und das Lastanschlusselement (112) mittel- oder unmittelbar mit der Probe (1) verbunden sind.

5. Vorrichtung nach Anspruch 4,
**dadurch gekennzeichnet, dass** die Vorspanneinrichtung (118) ein die Energiewandler-Systeme (16, 18, 30, 32) umschließendes Rohr aufweist.

6. Vorrichtung nach einem der Ansprüche 1 bis 5,
**dadurch gekennzeichnet, dass** das multifunktionale Festkörperwandlerwerkstoffsystem aus einer Piezo-Keramik, einem elektro- oder magnetostriktiven Material , vorzugsweise einer elektro- oder magnetostriktiven Keramik, einem Formgedächtnismaterial, vorzugsweise eine Formgedächtnislegierung, oder einer Kombination aus den vorstehend genannten Materialien besteht.

7. Vorrichtung nach einem der Ansprüche 1 bis 6,
**dadurch gekennzeichnet, dass** die Energiezufuhr in Form elektrischer Energie erfolgt und eine elektrische Energiequelle (130) mit dem multifunktionalen Festkörperwandlerwerkstoffsystem verbunden ist, oder
dass zur Energiezufuhr in Form magnetischer oder elektromagnetischer Energie das multifunktionale Festkörperwandlerwerkstoffsystem einem magnetischen Wechselfeld ausgesetzt ist, das durch Vorsehen eines Elektromagneten erzeugbar ist.

8. Vorrichtung nach einem der Ansprüche 1 bis 7,
**dadurch gekennzeichnet, dass** die Energiezufuhr derart erfolgt, dass das multifunktionale Festkörperwandlerwerkstoffsystem Deformationen unterliegt, die sich periodisch mit einer Frequenz von 1000 bis 20000 Hz, vorzugsweise 1100 bis 4000 Hz, ausbilden.

9. Vorrichtung nach einem der Ansprüche 1 bis 8,
**dadurch gekennzeichnet, dass** das Lager (3) und das Gegenlager (5) räumlich fest sind, und
dass das wenigstens eine Aktorelement (6) einerseits mit dem festen Gegenlager (5) und andererseits mit der Probe (1) verbunden ist.

10. Vorrichtung nach einem der Ansprüche 1 bis 9,
**dadurch gekennzeichnet, dass** wenigstens zwei Aktorelemente (6, 8) vorgesehen sind, von denen das erste Aktorelement (8) in Form eines an sich bekannten servohydraulischen, servomechanischen und/oder pneumatischen Aktors ausgebildet ist, der im Lastpfad (A) zwischen dem Lager (3) und Gegenlager (5) vorgesehen und mittel- oder unmittelbar mit der Probe (1) verbunden ist, und
dass das wenigstens zweite Aktorelement (6) das multifunktionale Festkörperwandlerwerkstoffsystem aufweist und im Lastpfad (A) parallel oder in Serie mit dem ersten Aktorelement (8) angeordnet und mittel- oder unmittelbar mit der Probe (1) verbunden ist.

11. Vorrichtung nach einem der Ansprüche 1 bis 6,
**dadurch gekennzeichnet, dass** das wenigstens eine Aktorelement (6), das ein multifunktionales Festkörperwandlerwerkstoffsystem aufweist, in Richtung des Lastpfades (A) gerichtete translatorische und/oder relativ zum Lastpfad (A) rotatorisch orientierte Deformationen erfährt, durch die in die Probe Druck- und/oder Zugkräfte und/oder Torsionskräfte und/oder Biegungen und/oder Schubkräfte gesteuert einleitbar sind.

12. Vorrichtung nach einem der Ansprüche 1 bis 11,
**dadurch gekennzeichnet, dass** ein Belastungs- oder Prüfrahmen (4) vorgesehen ist, der einen ersten und einen zweiten räumlich voneinander fest beabstandeten Rahmenbereich aufweist, von denen der erste Rahmenbereich dem Lager (3) und der zweite Rahmenbereich dem Gegenlager (5) entspricht.

## Claims

1. A device for dynamically load testing a sample (1), comprising a bearing (3), to which the sample (1) can be directly or indirectly connected in a detachable manner, as well as a counter-bearing (5) that can be effectively connected to the sample (1) by means of at least one actuator element (6) such that the at least one actuator element (6) introduces dynamic mechanical loads into the sample (1) which act along a load path (A) that is directed between the bearing (3) and the counter-bearing (5) and extends through the sample (1), wherein the at least one actuator element (6) features a multifunctional solid body conversion material system that undergoes deformations due to the supply of energy, and
wherein said deformations are the cause or at least one of the causes for the mechanical loads occurring within the sample (1),
**characterized in that** the actuator element comprising the multifunctional solid body conversion material system features the following components:
a) a base connecting element (110),
b) a load connecting element (112),
c) at least one energy conversion system (114, 116; 410, 416) that extends between the base connecting element (110) and the load connecting element (112) and features a multifunctional solid body conversion material, wherein the energy conversion system (114, 116; 410, 416) has a predominant direction that is oriented in the direction of the load path (A);
d) at least one prestressing element (118) that extends between the base connecting element (110) and the load connecting element (112), wherein the prestressing element (118) exerts a mechanical prestress upon the energy conversion system (114, 116; 410, 416),
e) at least one shear force diverting element (120) that extends between the base connecting element (110) and the load connecting element (112),
e1) wherein the shear force diverting element features a two-dimensional element (122) that is arranged perpendicular to the predominant direction, particularly a membrane or a leaf spring, which is flexible along said load path (A) and being rigid perpendicular thereto,
e2) wherein the base connecting element (110) is connected to the two-dimensional element (122) by means of at least one connecting element (126);
e3) wherein the load connecting element (112) is connected to the two-dimensional element (122) by means of at least one second connecting element,
e4) wherein the first and the second connecting element (124, 126) are connected to the two-dimensional element (122) on regions that do not overlap one another in a projection on the load path (A), and
e5) wherein the base connecting element (110) is connected to the counter-bearing (5) and the load connecting element (112) is connected to the sample (1) in a direct or indirect manner.

2. The device according to Claim 1,
**characterized in that** the functions of the prestressing element (118) and of the shear force diverting element (120) are fulfilled by the same component (120).

3. The device according to Claim 1 or 2,
**characterized in that** the energy conversion system (114, 116; 410, 416) comprises at least two partial systems (410, 416) that respectively feature a multifunctional solid body conversion material, as well as a coupling element (412),
- wherein at least one first partial system (410) extends between the base connecting element (110) and the coupling element (412), and
- wherein at least one second partial system (416) extends between the coupling element (412) and the load connecting element (112).

4. A device according to the preamble of Claim 1,
**characterized in that** the actuator element with the multifunctional solid body conversion material features the following components:
- a base connecting element (110),
- a load connecting element (112) and
- at least one support element (14),
wherein
- at least one first energy conversion system (16, 18) featuring a multifunctional solid body conversion material extends between at least one application point (20, 22) that lies on the base connecting element (110) and at least one application point (24, 26) that lies on the load connecting element;
- at least one second energy conversion system (30, 32) featuring a multifunctional solid body conversion material extends between at least one application point (34, 36) that lies on the support element (14) and at least one application point (38, 40) that lies on the load connecting element (112);
- the base connecting element (110) is connected to the at least one support element (14) by means of at least one prestressing device (118) in such a way that a prestress is exerted upon the first and the second energy conversion system (16, 18), (30, 32) by the prestressing device (118),
- the load connecting element (112) features a part that lies in an intermediate space between the base connecting element (110) and the support element (14) and a part that lies outside the intermediate space between the base connecting element (110) and the support element (14), and
- the base connecting element (110) is connected to the counter-bearing (5) and the load connecting element (112) is connected to the sample (1) in a direct or indirect manner.

5. The device according to Claim 4,
**characterized in that** the prestressing device (118) features a tube that encloses the energy conversion systems (16, 18, 30, 32).

6. The device according to one of Claims 1 to 5,
**characterized in that** the multifunctional solid body conversion material system consists of a piezoceramic, electrostrictive or magnetostrictive material, preferably an electrostrictive or magnetostrictive ceramic, a shape memory material, preferably a shape memory alloy, or a combination of the aforementioned materials.

7. The device according to one of Claims 1 to 6,
**characterized in that** energy is supplied in the form of electric energy and an electric energy source (130) is connected to the multifunctional solid body conversion material system, or
**in that** energy is supplied in the form of magnetic or electromagnetic energy and the multifunctional solid body conversion material system is subjected to an alternating magnetic field that can be generated by providing an electromagnet.

8. The device according to one of Claims 1 to 7,
**characterized in that** the energy supply is realized such that the multifunctional solid body conversion material system is subjected to deformations that periodically occur with a frequency of 1000 to 20000 Hz, preferably 1100 to 4000 Hz.

9. The device according to one of Claims 1 to 8,
**characterized in that** the bearing (3) and the counter-bearing (5) are spatially fixed, and
**in that** the at least one actuator element (6) is connected to the stationary counter-bearing (5) on one side and to the sample (1) on the other side.

10. The device according to one of Claims 1 to 9,
**characterized in that** at least two actuator elements are provided,
wherein the first actuator element (8) is realized in the form of a generally known servohydraulic, servomechanic and/or pneumatic actuator that is arranged in the load path (A) between the bearing (3) and the counter-bearing (5) and connected to the sample (1) in a direct or indirect manner, and
**in that** the at least one second actuator element (6) features the multifunctional solid body conversion material system, is arranged in the load path (a) parallel or in series with the first actuator element (8) and connected to the sample (1) in a direct or indirect manner.

11. The device according to one of Claims 1 to 6,
**characterized in that** the at least one actuator element (6) featuring a multifunctional solid body conversion material system is subjected to translatory deformations that are oriented in the direction of the load path (A) and/or rotatory deformations relative to the load path (A), wherein compressive and/or tensile forces and/or torsional forces and/or bending forces and/or shearing forces can be introduced into the sample in a controlled manner by means of said deformations.

12. The device according to one of Claims 1 to 11,
**characterized in that** a loading or test frame (4) is provided that features a first and a second frame region that are spatially spaced apart from one another by a fixed distance, wherein the first frame region corresponds to the bearing (3) and the second frame region corresponds to the counter-bearing (5).

## Revendications

1. Dispositif pour l'essai sous contrainte dynamique d'une éprouvette (1) avec un palier (3), avec lequel l'éprouvette (1) est susceptible d'être reliée directement ou indirectement, ainsi qu'avec un palier-support (5), qui par l'intermédiaire d'au moins un élément actionneur (6) est susceptible d'être amené en interaction avec l'éprouvette (1), de sorte que le au moins un élément actionneur (6) introduise dans l'éprouvette (1) des contraintes mécaniques dynamiques, qui agissent le long d'un chemin de charge (A) orienté entre le palier (3) et le palier-support (5) et s'écoulant à travers l'éprouvette (1), et que le au moins élément actionneur (6) comporte un système multifonctionnel de matière de convertisseur à corps solide qui par apport d'énergie subit des déformations qui sont causales ou au moins co-causales des contraintes mécaniques naissant au sein de l'éprouvette (1),
**caractérisé en ce que** l'élément actionneur comportant le système multifonctionnel de matière de convertisseur à corps solide comporte les composants suivants :
a) un élément de connexion de base (110),
b) un élément de connexion de charge (112),
c) au moins un système convertisseur d'énergie (114, 116; 410, 416) s'étendant entre l'élément de connexion de base (110) et l'élément de connexion de charge (112), comportant une matière de convertisseur à corps solide, le système convertisseur d'énergie (114, 116; 410, 416) présentant une direction préférentielle orientée en direction du chemin de charge (A) ;
d) au moins un élément de précontrainte (118) s'étendant entre l'élément de connexion de base (110) et l'élément de connexion de charge (112), l'élément de précontrainte (118) exerçant une précharge mécanique sur le système convertisseur d'énergie (114, 116; 410, 416),
e) au moins élément dérivateur de poussée (120) s'étendant entre l'élément de connexion de base (110) et l'élément de connexion de charge (112),
e1) l'élément dérivateur de poussée comportant un élément bidimensionnel (122) disposé à angle droit par rapport à la direction préférentielle, notamment une membrane ou un ressort à lames, qui en direction du chemin de charge est flexible et rigide à la perpendiculaire de ce dernier,
e2) l'élément de connexion de base (110) étant relié avec l'élément bidimensionnel (122) par l'intermédiaire d'au moins un élément de liaison (126) ;
e3) l'élément de connexion de base (112) étant relié avec l'élément bidimensionnel (122) par l'intermédiaire d'au moins un deuxième élément de liaison (124),
e4) le premier et le deuxième élément de liaison (124, 126) étant reliés sur des régions qui ne se chevauchent pas, en projection vers le chemin de charge (A) avec l'élément bidimensionnel (122), et
e5) l'élément de connexion de base (110) avec le palier-support (5) et l'élément de connexion de charge (112) étant reliés indirectement ou directement avec l'éprouvette (1).

2. Dispositif selon la revendication 1,
**caractérisé en ce que** la fonction de l'élément de précontrainte (118) et de l'élément dérivateur de poussée (120) est prise en charge par le même élément constitutif (120).

3. Dispositif selon la revendication 1 ou 2,
**caractérisé en ce que** le système convertisseur d'énergie (114, 116; 410, 416) prévoit au moins deux systèmes partiels (410, 416) comportant chacun un système multifonctionnel de matière de convertisseur à corps solide ainsi qu'un élément de couplage (412),
- au moins un premier système partiel (410) s'étendant entre l'élément de connexion de base (110) et l'élément de couplage (412) ; et
- au moins un deuxième système partiel (416) s'étendant entre l'élément de connexion de base (412) et l'élément de couplage (112) ; et.

4. Dispositif selon le préambule de la revendication 1,
**caractérisé en ce que** l'élément actionneur comportant la matière multifonctionnelle de convertisseur à corps solide comporte les composants suivants :
- un élément de connexion de base (110),
- un élément de connexion de charge (112)
- au moins un élément d'appui (14)
- au moins un premier système convertisseur d'énergie (16, 18) comportant une matière multifonctionnelle de convertisseur à corps fixe s'étendant entre au moins un point d'engagement (20, 22) situé sur l'élément de connexion de base (110) et au moins un point d'engagement (24, 26) situé sur l'élément de connexion de charge ;
- au moins un deuxième système convertisseur d'énergie (30, 32) comportant une matière multifonctionnelle de convertisseur à corps fixe s'étendant entre au moins un point d'engagement (34, 36) situé sur l'élément d'appui (14) et au moins un point d'engagement (38, 40) situé sur l'élément de connexion de charge (112);
- l'élément de connexion de base (110) étant relié avec le au moins un élément d'appui (14) via au moins un dispositif de précontrainte (118), de sorte que par le dispositif de précontrainte(118) une précharge agisse sur le premier et sur le deuxième système convertisseur d'énergie (16, 18), (30, 32),
- l'élément de connexion de charge (112) comportant une partie située dans un interstice entre l'élément de connexion de base (110) et l'élément d'appui (14) et une partie située à l'extérieur de l'interstice entre l'élément de connexion de base (110) et l'élément d'appui (14), et
- l'élément de connexion de base (110) avec le palier-support (5) et l'élément de connexion de charge (112) étant reliés indirectement ou directement avec l'éprouvette (1).

5. Dispositif selon la revendication 4,
**caractérisé en ce que** le dispositif de précontrainte (118) comporte un tube entourant les systèmes convertisseurs d'énergie (16, 18, 30, 32).

6. Dispositif selon l'une quelconque des revendications 1 à 5,
**caractérisé en ce que** le système multifonctionnel de matière de convertisseur à corps solide consiste dans une piézocéramique, dans une matière électrorestrictive ou magnétorestrictive, de préférence dans une céramique électrorestrictive ou magnétorestrictive, de préférence un alliage à mémoire de forme ou une dans une association des matières précédemment citées.

7. Dispositif selon l'une quelconque des revendications 1 à 6,
**caractérisé en ce que** l'apport d'énergie s'effectue sous la forme d'énergie électrique ou **en ce qu'**une source d'énergie électrique (130) est reliée avec le système multifonctionnel de matière de convertisseur à corps solide, ou
**en ce que** pour l'apport d'énergie sous la forme d'énergie magnétique ou électromagnétique, le système multifonctionnel de matière de convertisseur à corps solide est exposé à un champ magnétique alternatif, qui est susceptible d'être créé en prévoyant un électroaimant.

8. Dispositif selon l'une quelconque des revendications 1 à 7,
**caractérisé en ce que** l'apport d'énergie s'effectue de sorte que le système multifonctionnel de matière de convertisseur à corps solide soit soumis à des déformations qui se créent périodiquement à une fréquence de 1000 à 20000 Hz, de préférence de 1100 à 4000 Hz.

9. Dispositif selon l'une quelconque des revendications 1 à 8,
**caractérisé en ce que** le palier (3) et le palier-support (5) sont fixes dans l'espace et
**en ce que** le au moins un élément actionneur (6) est relié d'une part avec le palier-support (5) fixe et d'autre part avec l'éprouvette (1).

10. Dispositif selon l'une quelconque des revendications 1 à 9,
**caractérisé en ce qu'**il est prévu au moins deux éléments actionneurs (6, 8), dont le premier élément actionneur (8) est réalisé sous la forme d'un actionneur servohydraulique, servomécanique et/ou pneumatique connue en soi, qui est prévu dans le chemin de charge (A) entre le palier (3) et le palier-support (5) et qui est relié indirectement ou directement avec l'éprouvette (1) et **en ce que** le au moins deuxième actionneur (6) comporte le système multifonctionnel de matière de convertisseur à corps solide et est disposé dans le chemin de charge (A), à la parallèle ou en série avec le premier élément actionneur (8) et est relié indirectement ou directement avec l'éprouvette (1).

11. Dispositif selon les revendications 1 à 6,
**caractérisé en ce que** le au moins un élément actionneur (6) qui comporte un système multifonctionnel de matière de convertisseur à corps solide subit des déformations en translation dirigées en direction du chemin de charge (A) et/ou orientées en rotation par rapport au chemin de charge (A), par l'intermédiaire desquelles des forces de pression et/ou des forces de traction et/ou des forces de traction et/ou des flexions et/ou des forces de poussées sont susceptibles d'être introduites de façon commandée dans l'éprouvette.

12. Dispositif selon l'une quelconque des revendications 1 à 11,
**caractérisé en ce qu'**il est prévu un cadre de contrainte ou cadre d'essai (4) comportant une première et une deuxième région de cadre fixement écartées l'une de l'autre, dont la première région de cadre correspond au palier (3) et la deuxième région de cadre correspond au palier-support (5).
